# EUROPEAN PATENT SPECIFICATION

(11) **EP 1 575 316 B1**
(45) Date of publication and mention of the grant of the patent: **29.01.2014**
(21) Application number: 05251417.1
(22) Date of filing: 09.03.2005
(51) Int. Cl.: H04W 4/10, H04W 76/00, H04L 29/06, H04W 72/00, H04W 80/10

(54) **Transmission of image data during communication sessions**
Übertragung von Bilddaten während Kommunikationssitzungen
Transmission de données d'image pendant les sessions de communication

(30) Priority: 10.03.2004 GB 0405439
(43) Date of publication of application: 14.09.2005
(73) Proprietor: Vodafone Group PLC, Newbury Berkshire RG14 2FN (GB)
(72) Inventor: Temple, Stephen, Woking, Surrey GU22 8UQ (GB); Thompson, Peter Richard, Derby, DE22 5JY (GB)
(74) Representative: Harries, Simon George

(56) References cited:
- EP-A2- 1 161 053
- GB-A- 2 338 150
- US-A- 5 870 149

## Description

The present invention relates to a method of and system for controlling a communication session between at least a first device and a second device, each of which is associated with a communications network.

The third generation partnership project (3GPP) has recently defined a new concept known as IMS (IP - based Multimedia Subsystem). The aim of IMS is to allow users such as mobile telephone network operators to provide services to their subscribers as efficiently and effectively as possible. For example, the IMS architecture is likely to support the following communication types: voice, video, instant messaging, "presence" (a user's availability for contact), location-based services, email and web. Further communication types are likely to be added in the future.

This diverse collection of communication devices requires efficient session management due to the number of different applications and services that will be developed to support these communication types. The 3GPP have chosen Session Initiation Protocol (SIP) for managing these sessions.

The SIP protocol is a session-based protocol designed to establish IP based communication sessions between two or more end points or users. Once a SIP session has been established, communication between these end points or users can be carried out using a variety of different protocols (for example those designed for streaming audio and video). These protocols are defined in the SIP session initiation messages.

With IMS, users are no longer restricted to a separate voice call or data session. Sessions can be established between mobile devices that allow a variety of communication types to be used and media to be exchanged. The sessions are dynamic in nature in that they can be adapted to meet the needs of the end users. For example, two users might start a session with an exchange of instant messages and then decide that they wish to change to a voice call, possibly with video. This is all possible within the IMS framework. If a user wishes to send a file to another user and the users already have a session established between each other (for example, a voice session) the session can be redefined to allow a data file exchange to take place. This session redefinition is transparent to the end user.

GB2338150 (Orange) describes a control technique to enable a mobile terminal to be involved in a video conferencing session over a half duplex link. One embodiment relates to video conferencing and image data is sent concurrently with audio data.

EP1161053 (Sony) is concerned with transmitting image data relating to participants in a group conversation. A "multipoint" communication arrangement is disclosed, which enables a plurality of terminals to communicate. The terminals are dedicated terminals that are connected to the communications network by standard mobile terminals/PCs. Again, embodiments are described where content, such as common images and sound are transmitted amongst the terminals. A combined signal including images picked up by the cameras of the terminals involved in the group communication is created by a centralised network controller.

According to a first aspect of the present invention, there is provided a method of controlling a push-to-talk over cellular, PoC, communication session as claimed in claim 1.

According to a second aspect of the present invention, there is provided a system for controlling a PoC communication session as claimed in claim 18.

A method and system for controlling a communication session between a first device and a second device via a telecommunications network, embodying the invention, will now be described by way of example, with reference to the accompanying drawings in which:
Figure 1 shows schematically the components of a telecommunications system in accordance with the embodiment of the invention;
Figures 2A and 2B are a flow chart showing the operations performed by the elements shown in Figure 1;
Figure 3 shows the exchange of data between elements of the communications network to establish a PoC communication link; and
Figure 4 shows the exchange of data between components in the telecommunications network to establish a PoC communication link and to transmit the image data from the first device to the second device.

One application of IMS is push-to-talk over cellular (PoC). PoC allows a communication session to be established between a group of devices such that the user of one of the devices can speak and the users of each of the other devices will hear that person speak. During such a communication session each device functions like a two-way radio or walkie-talkie in a one-to-one or one-to-many group mode. Full duplex speech communication between the users of the respective devices during the communications session is not possible ― only one user can speak at a time.

One feature of PoC is that, when the communication is established, there is an "always on" communication link between the devices. When a user wishes to talk to the or each of the other devices associated with the communication session, the user issues an appropriate instruction to their device (typically using a soft key - that is, a key whose function is programmable), and the user's speech is captured by their terminal and instantly, or within a relatively short period of time, is transmitted to the or each of the other terminals and is reproduced on those terminals. There is no requirement for the user inputting the speech data to dial the or each other device, and nor is there any requirement for the users of the devices receiving the speech to take any action to receive the speech data - it is automatically reproduced by their device when it is received (assuming, of course, the device is operating in an appropriate mode for allowing PoC communication).

PoC is described in the document "Push to talk over Cellular (PoC) ― Architecture, Draft Version 1.0 - 13 February 2004" available from Open Mobile Alliance Limited (OMA).

In the embodiment to be described a PoC communication session is established using IMS. However, it should be appreciated that a PoC communication session in accordance with the invention could be established over existing GSM/GPRS networks by exchange of data packets but without IMS.

One of the advantages of PoC is that less bandwidth may be required for a PoC call (which uses the packet switched domain) than a normal voice call (which uses the circuit switched domain). In a circuit switched call, network capacity is used for the full duration of the call from the initial connection attempt to the time that the call terminates. Network capacity is used even when no speech data is transmitted. In a PoC call only the actual blocks of data that contain speech will be transmitted. A PoC communication session between devices might last one hour. However, if speech is only transmitted for five minutes during that hour, only network capacity corresponding to that five minutes is used.

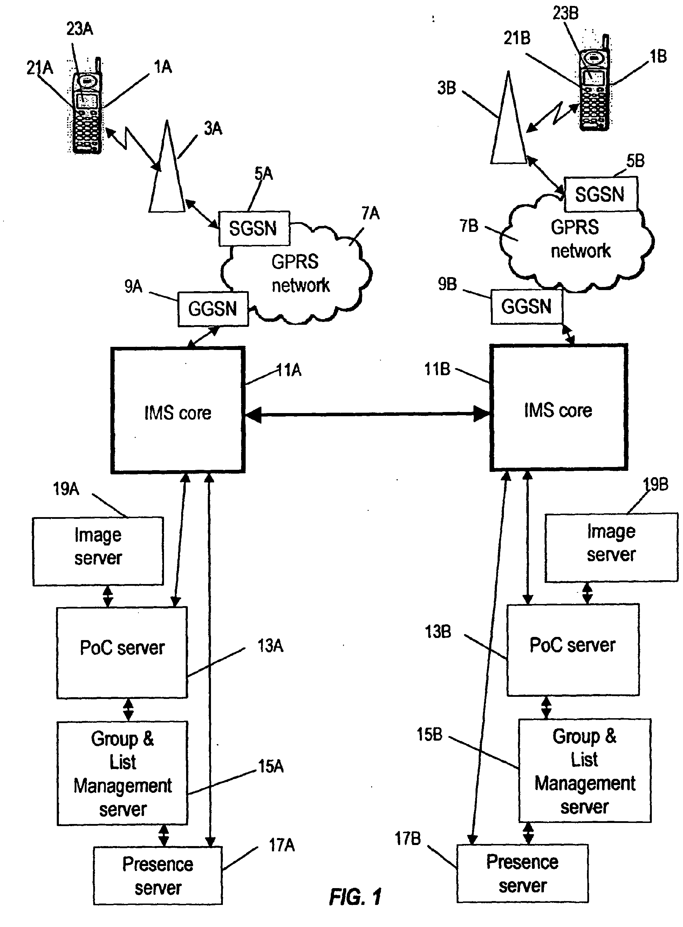

Referring initially to Figure 1, a GPRS enabled mobile device 1A communicates wirelessly with radio network controller (RNC) 3A (in fact via a "node B", which is not shown for the sake of simplicity). A fixed (wired) connection between RNC 3A and serving GPRS support node (SGSN) 5A associated with mobile telecommunications network 7A allows packet data to be transmitted between the mobile device 1A and the mobile telecommunications network 7A in the packet switched domain. Gateway GPRS support node (GGSN) 9A provides an interface between the mobile telecommunications network 7A and IMS (SIP) core 11A. The IMS core 11A contains SIP proxys and SIP registers. PoC server 13A is coupled to the IMS core 11A for providing PoC functionality (to be described in more detail below).

Group and list management server 15A is responsible for the management of contact lists (containing the addresses of other users), group lists (containing the addresses of other groups), access lists and permissions management. A contact is an identity of a user, or a group. A contact includes the SIP URI or a TEL URI of the entity, type of the entity (user or group) and optionally the display name. Each PoC user has two access lists: a user accept list and user reject list. Access lists are used for controlling whether the PoC server is allowed or not to send talk session requests to the user when requested by other user. Each PoC user can define permission management rules that describe who is allowed to contact him/her using the PoC service. The PoC Server implements the access control policy according to these defined rules.

A presence server 17A is provided to provide the IMS core 11A with information indicating whether or not devices associated with the mobile telecommunications network 7A are available for contact or not.

In accordance with a feature of the present invention an image server 19A (also to be described in more detail below) is provided for controlling the storage of image data and supplying this to the PoC server 13A. The image server 19A could in fact be part of the PoC server 13A.

Figure 1 shows a second network including elements corresponding to the elements of the first network described above, which elements are designated for the same reference numeral but with the suffix "B". Data are exchanged between the IMS core 11A of the first network and the IMS core 11B of the second network using SIP signalling, which is transmitted, for example, via the Internet.

Of course, it should be appreciated that, although only one mobile device 1A and 1B, and 1RNC 3A and 3B is shown associated with each mobile telecommunications network 7A and 7B, typically there will be a multiplicity of RNCs and mobile devices associated with each mobile telecommunications network 7A and 7B.

It is also important to note that, although in the embodiment described the mobile terminal 1A is associated with a different network 7A from the mobile terminal 1B, the invention is equally applicable to a scenario where the users of two mobile terminals associated with the same mobile telecommunications network wish to establish a PoC session.

It will now be described what happens when the user of mobile device 1A wishes to establish a PoC communication session with the user of mobile terminal 1B.

To Establish a PoC communication session the users of respective mobile devices will associate themselves in a group between which PoC messages may be sent by exchanging contact information and possibly other information (such as a password).

The user of mobile device 1A indicates that he/she wishes to establish a PoC communication session with the user of the mobile device 1B by sending a command from the mobile terminal 1A to the PoC server 13A, via RNC 3A, SGSN 5A, GGSN 9A and IMS core 11A. The PoC server 13A will then consult the group and list management server 15A and the presence server 17A to determine the allowability and availability of the mobile terminal 1B to take part in a PoC communication session (or this information may be obtained from the group list and management server 15B and presence server 17B of the network 7B via the link between the IMS cores 11A and 11B).

A PoC communication session is then established between mobile device 1A and mobile device 1B by the exchange of data between IMS cores 11A and 11B. The PoC servers 13A,13B make a record on each user's account with their network 7A,7B in order that an appropriate charge can be made (where necessary) for establishment of the PoC session.

In a PoC communication session there is only one PoC server performing a controlling PoC function. There could be more than one PoC server performing the participating PoC function in the PoC session. In the embodiment described, where there are only two devices in the PoC session, PoC server 13B will perform a controlling PoC function and a participating PoC function, and PoC server 13A will perform a participating PoC function.

The controlling PoC function:-
- Provides centralized PoC session handling
- Provides the centralized media distribution
- Provides the centralized floor control functionality including talker identification (for arbitrating requests from PoC clients ― devices 1A and 1B ― for the right to speak)
- Provides SIP session handling, such as SIP session organisation, termination, etc.
- Provides policy enforcement for participation in group sessions
- Provides the participants information
- Collects and provides centralized media quality information
- Provides centralized charging reports

The participating PoC function may:-
- Provide PoC session handling
- Provide the media relay function between PoC client (device 1A,1B) and controlling PoC server
- Provide user media adaptation procedures
- Provide the floor control message relay function between PoC client and controlling PoC server
- Provide SIP session handling, such as SIP session origination, termination, etc. on behalf of the represented PoC client
- Provide policy enforcement for incoming PoC session (e.g. access control, availability status, etc.)
- Collect and provide media quality information
- Provide the participant charging reports

The IMS cores 11A and 11B perform the following functions that are needed in support of the PoC service.
- Routes the SIP signalling between the PoC client (devices 1A and 1B) and the PoC server
- Provides discovery and address resolution services
- Supports SIP compression
- Performs authentication and authorization of PoC client based on user's service profile
- Maintains the registration state
- Provides charging information

While the PoC communication session is established, the user of mobile terminal 1A can talk (that is, send speech data for reproduction on the device 1B) by pressing soft key 21 A, above which, during the PoC communication session, the sign "press-to-talk" or "PTT" is displayed on the display 23A of the mobile terminal 1A. Of course, if more than one other device also joins the communication session, a plurality of soft keys may be provided, or a suitable graphical user interface provided, to allow entry of a command for speech data to be sent to any one of or all of the group of devices.

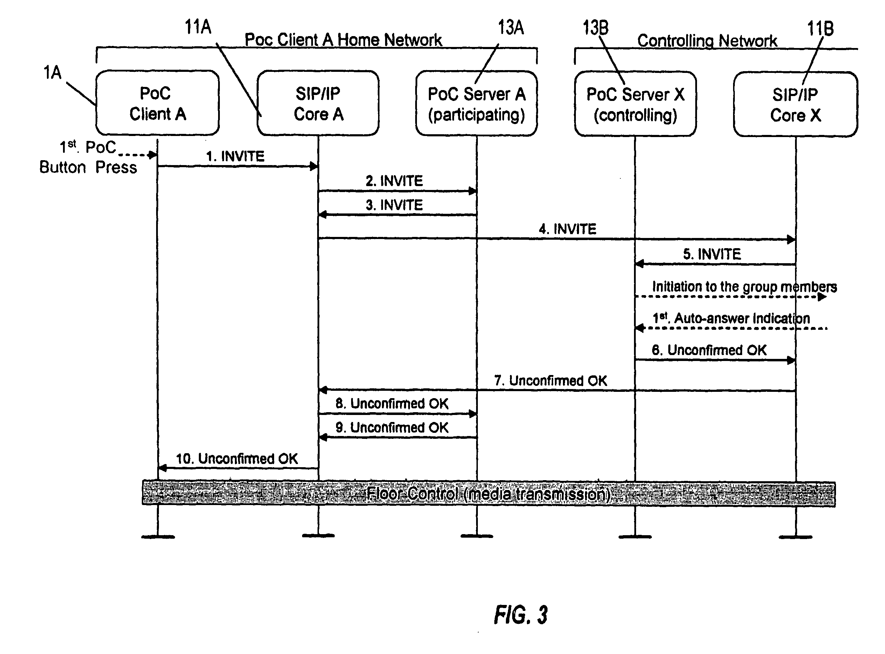

As shown in Figure 3, the mobile terminal 1A then issues a SIP INVITE message (message "1.") addressed to mobile device 1B (and, if intended for a group of devices, addressed to each of the other devices in the group) to IMS core 11A (via the intermediate elements shown in Figure 1). Message "1." may include the following information elements:-
a. contact identity information
b. PoC address of the user initiating this PoC Session
c. PoC service indication
d. Media parameters of PoC client A (device 1A)

The IMS core 11A passes the SIP INVITE message (message "2.") to the PoC server 13A, which checks the availability and allowability of the transmission of speech data to the device 1B by consulting group and list management server 15A/15B and presence server 17A/17B, and makes an appropriate record for charging for the transmission of speech data (if required). Message "2." may include:-
a. contact identity information
b. PoC address of the user initiating this PoC Session
c. PoC service indication
d. Media parameters of PoC client A (device 1A)

If the availability and allowability criteria are met, the PoC server 13A then identifies that device 1 B is not hosted by PoC server 13A, and it sends the SIP INVITE message (message "3.") to the IMS core 11A. Message "3." may include:-
a. contact identity information
b. PoC address of the user initiating the PoC session
c. PoC service indication
d. PoC server 13A (participating) selected media parameters

The IMS core 11A transmits the SIP INVITE message (message "4.") to the IMS core 11 B associated with the second mobile telecommunications network 7B. Message "4." may include:-
a. contact identity information
b. PoC address of the user initiating the PoC session
c. PoC service indication
d. PoC server 13A (participating) selected media parameters

The IMS core 11B then transmits the SIP INVITE message (message "5.") to the PoC server 13B. Message "5." may include:-
a. contact identity information
b. PoC address of the user initiating the PoC session
c. PoC service indication
d. PoC server 13A (participating) selected media parameters

The PoC server 13B may make an appropriate record on the account of the user of device 1B so that the user is charged for receipt of the speech data (if required). The PoC server 13B then generates an initiation message for the device 1B, which is sent to the IMS core 11B and transmitted to the mobile device 1B via GGSN 9B, SGSN 5A and RNC 3B. (Device 1B is not shown in Figure 3 for the sake of simplicity.)

A response message "auto answer indication" is received from the mobile device 1B (assuming it is in an area of coverage by the mobile telecommunications network 7B) and this is passed to the PoC server 13B via the intermediate elements shown in Figure 1. A message "unconfirmed ok", advising of successful receipt of the SIP INVITE message by the device 1B, (message "6.") is transmitted from the PoC server 13B to the IMS core 11B, and from there to the IMS core 11A associated with the first mobile telecommunications network 7A (message "7."). The IMS core 11A of the first mobile telecommunications network transmits this message (message "8.") to the PoC server 13A. The message (message "9.") is returned to the IMS core 11A, from where it is forwarded to the mobile device 1A (message "10.").

Messages "6." to "8." may include PoC server 13B selected media parameters. Messages "9." and "10." may include PoC server 13A selected media parameters.

Audio data received by the microphone of the mobile terminal 1A is then captured by that mobile terminal and is transmitted as packet data to the network 7A, and to the IMS core 11A, allowing the communication of this data to the IMS core 11B of the second network. This data are received by the mobile terminal 1B where it is automatically reproduced by the loudspeaker of that mobile terminal as an audio signal, allowing the user of mobile terminal 1B to receive and understand the speech of the user of mobile terminal 1A. The speech data are reproduced by the mobile terminal 1B without requiring any user operation by the user of mobile terminal 1B. Typically the speech data will be reproduced by the terminal 1B at virtually the same time as it is input to the mobile terminal 1A.

In accordance with an important feature of the embodiment, and as an enhancement to the PoC arrangement described above in relation to Figure 3, the users of devices A and B may have an image displayed in conjunction with their speech data being reproduced on the other terminals to which the communication session relates.

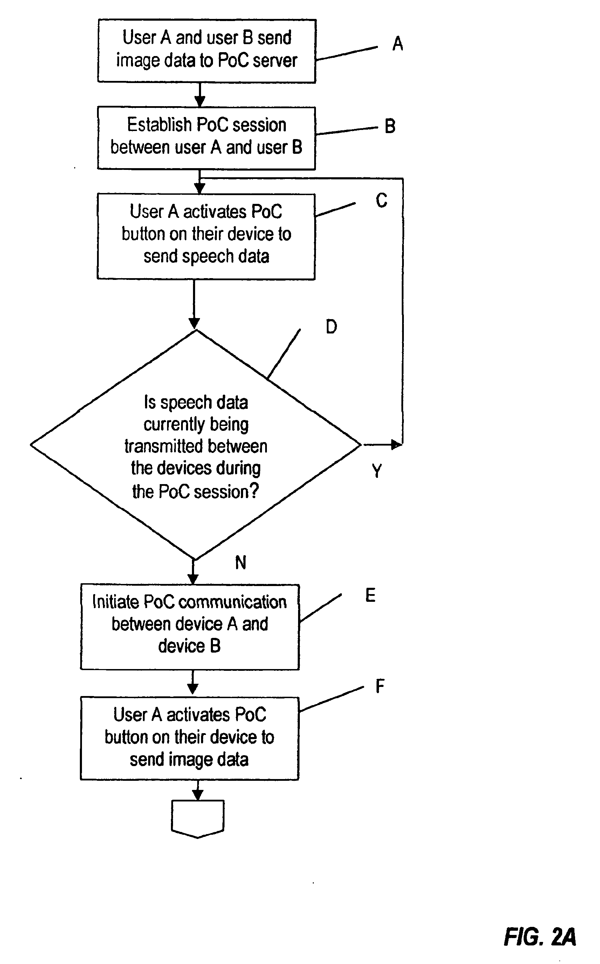

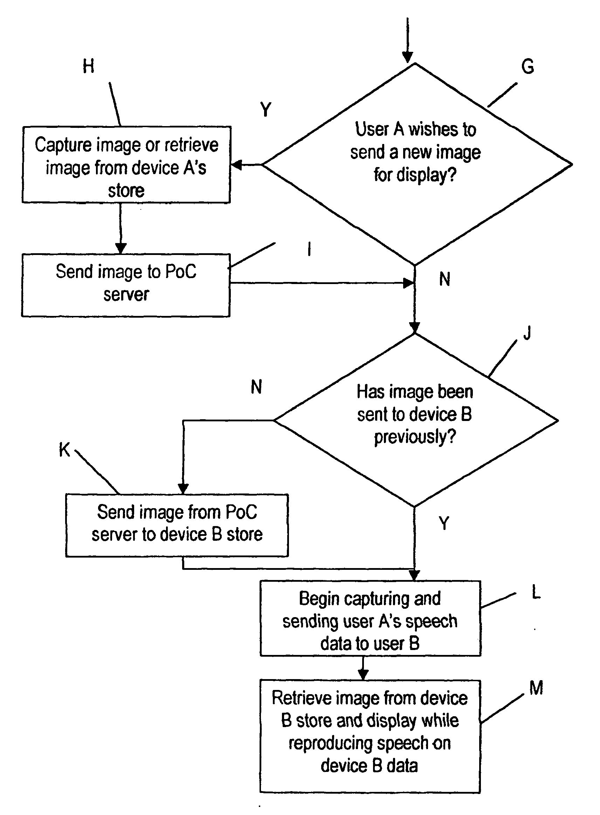

As indicated by the flow chart of Figure 2, prior to initiation of the communication session, image data are sent from the terminals 1A and 1B to their respective PoC servers 13A,13B. The image data may be data pre-stored on the mobile terminal 1A,1B, or may be image data captured by a camera provided in or in association with the mobile terminal. For example, the user of mobile terminal 1A may wish to capture an image of him or herself so that, when the user's speech is reproduced during the subsequent communication session, an image of the user of device 1A will be made available to the user of device 1B to provide a visual indication of the source of the speech data.

The image data may be transmitted to the PoC server by any suitable means. Typically the image data will be transmitted as binary data streams in the packet switched domain, for example in the form of a multimedia message (MMS).

The PoC server 13A will then pass the image data to image server 19A which will store the image data for future distribution.

These procedures are represented by **step A** of the flow chart of Figure 2.

At **step B** a PoC communication session is established between user A and user B generally in the manner described above.

User A then activates soft key 21A on mobile terminal 1A (**step C**) to indicate that they wish to send speech data. The mobile terminal 1A then communicates with IMS core 11A to determine whether speech data are currently being transmitted between other devices in the PoC communication session (**step D**). If it is determined that speech data are being transmitted already between devices to which the communication session relates, no action is taken in response to activation of the soft key 21 A (because, as described above, in a PoC session only half duplex communication is permitted).

If speech data are not currently being transmitted between devices associated with the communication session, a PoC communication link is initiated between device 1A and device 1B generally in the manner described in relation to Figure 3 (**step E**).

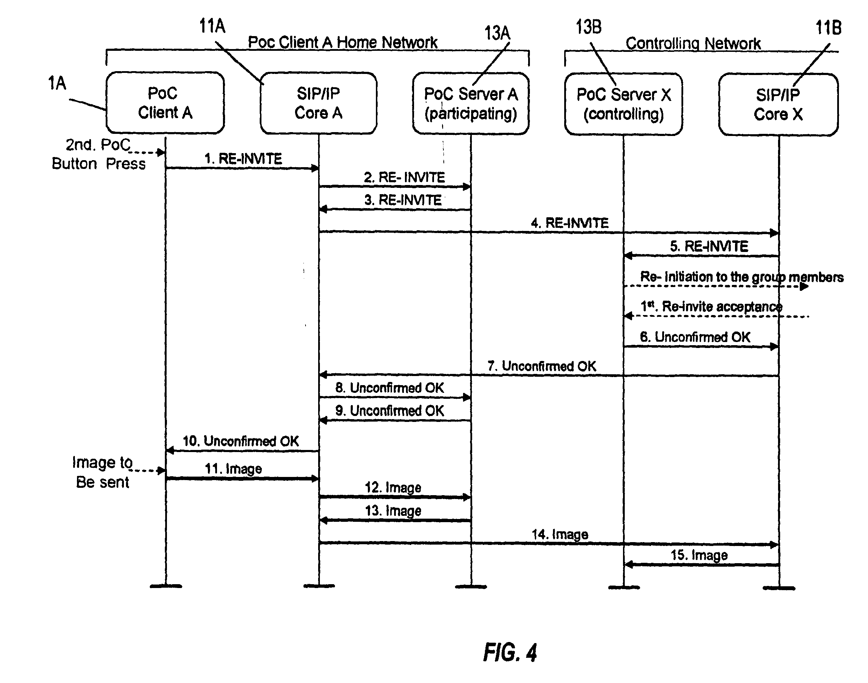

However, the user of device 1A may indicate that they wish to display an image before and/or during the time that their speech data are reproduced on mobile terminal 1B by operating the soft key 21 A a second time (typically in quick succession with the first operation in step C) - **step F**. A SIP RE-INVITE message (with which is effectively a SIP INVITE message) is then sent, as shown in Figure 4, to re-negotiate the SIP session. It is preferred to re-negotiate the SIP session using this process as the terminal 1B might not support image reception and/or display, or may support it but not in a way that is compatible with that of mobile terminal 1A and/or the first network 7A.

The communication types supported by the devices may be determined in accordance with the procedure described in our co-pending United Kingdom patent application No. GB 0302568.1 ("Soft Key SIP"). A negotiation procedure may be performed between device 1A and 1B so that the image data are optimised for the display on the screen 23 B of terminal 1 B in accordance with the procedure described in our co-pending United Kingdom patent application GB 0320635.6 ("Press to See").

After this re-negotiation process, compatibility and image transmission optimisation is established (by exchange of messages "1." to "10." of Figure 4).

The user of device 1A may wish to send a new image for display with speech data (**step G**). For example, this could be an image of an object that the user wishes to discuss. If the user does wish to send a new image, the image is captured or retrieved from a store or memory provided on the terminal 1A (**step H**). The image data stored in device 1A is transmitted to IMS core 11A (message "11."), and from there to PoC server 13A (message "12.") - **step I**. The image is then passed to image server 19A where it is stored. Because the image is to be transmitted to the mobile terminal 1B for display contemporaneously with the speech data from mobile terminal 1A, the image data are returned to the IMS core 11A (message " 13. "), from where it is transmitted to the IMS core 11B associated with the second network 7B (message "14. "). The IMS core 11B passes the image data to the PoC server 13B (message "15."). The PoC server 13B in turn passes the image data to image server 19B where it is stored.

Whether or not the new image is to be sent from device 1A, the activation of the softkey 21 A in step F causes a message to be generated in the PoC communication link to indicate that device 1B should display an image associated with device 1A. The IMS core 11B instructs PoC server 13B to determine, by consulting image server 19B, whether the image associated with the communication link (and device 1A) has been sent to device 1B previously (**step J**). If it is determined that the image has not been sent to device 1B previously (as will be the case at the initiation of a PoC communication session or after device 1A sends a new image), the image is sent from the PoC server 13B to the device 1B, where it is stored (**step K**). After sending of the image from the PoC server 13B to the mobile device 1B (if required), speech is captured from the user of device 1A and transmitted to device 1B in the manner described above (**step L**). Before and/or during reproduction of the speech on device 1B, the image data associated with device 1A is retrieved from the image store of device 1B and is displayed on the display 23B of device 1B (**step M**).

It will be appreciated from the above that, once the communication session has been established between devices 1A and 1B, the image data associated with device 1A will be stored on PoC server 13B and device 1B after the initial communication link has been established. When the image data to be displayed by device 1B (as instructed by the user of terminal 1A activating soft key 21A twice), there is no need for the image data to be transmitted to the device 1 B again. A message or flag included in the communications between the device 1A and device 1B causes the device 1B to retrieve the stored image associated with device 1A from its memory or store and to display this on its screen 23B.

In the event that it is not desired or possible to store images on device 1B, the image can be retrieved from PoC server 13B for display on the device 1B. Whilst this will involve communication of the image data from the PoC server 13A to the device 1B (via the intermediate elements shown in Figure 1), it is still advantageous as it is not necessary for the image data to be transmitted from the first mobile telecommunications network 7A to the second mobile telecommunications network 7B. However, it is preferred to store image data on the device 1B as this saves network bandwidth and shortens session latency.

Once a PoC communication session is established between devices 1A and 1B, it may not be necessary to send the image data via the PoC servers 11A and 11B. Instead, the image data could be sent directly from terminal 1A to terminal 1B (peer-to-peer operation). However, use of the PoC server 13B to receive and control storage of (using image server 19B) the image data will provide more efficient use of available communication bandwidth as the PoC server 19B can re-send the image data on to as many terminals as necessary. For example, if the communication session is established between a multiplicity of devices, a plurality of which are associated with the second mobile telecommunications network 7B, the image data needs to be transmitted from the PoC server 13B for each of those terminals, but needs to be transmitted only once from the first mobile telecommunications network 7A to the second mobile telecommunications network 7B.

The image data may be stored on image server 19B and/or device 1B after termination of the communication session, so that the image data can be used in a subsequent session without needing to be re-transmitted.

The protocol for image transmission will depend on the particular implementation as well as the protocol supported in the various networks involved. For example, a file transfer protocol (FTP) may be used or the image may be sent via an HTTP POST.

Image handling by the mobile terminals (clients) could be implemented as an extension to the PoC client software or form a separate client application which the PoC client will trigger upon recognition of a received image. Application programming interfaces (APIs) that provide image display and capture functionality are known and are available for proprietary phone operating systems Symbian and the Java MIDP 2.0 standard.

It should be appreciated that the image data might be a still image (that is, a single frame), or could be a sequence of images allowing the reproduction of a moving picture or video clip.

The invention is also applicable to controlling the sending of image data when a normal (circuit switched) voice call is initiated between two devices. A message or flag will be attached to the signalling required to set up this call, and will cause the receiving mobile terminal to automatically retrieve from its store, or from the image server 19B, an appropriate image associated with the party initiating the call.

In another embodiment, after a communication session is established between devices, the user of device 1A may activate a soft key to send image data (for example captured by a built-in camera) to all the other devices in the session ― without the image being sent contemporaneously with (or being associated with) speech data. No dialling of the recipients' telephone numbers is necessary.

## Claims

1. A method of controlling a push-to-talk over cellular, PoC, communication session for at least a first and second mobile telecommunication devices (1A, 1B), each of which is associated with a telecommunication network, the method including:
receiving a message or command from the first device (1A) during the communication session;
upon receiving the message or command, determining whether image data associated with the first device (1A) has been previously sent for storing in a store of the second device (step J); and
if it is determined that the image data has not been so sent, sending the image data to the second device for storing the image data in a store of the second device (1B) (step K), in order to enable the reproduction of that image data, from the store, on the second device (1B) in response to any subsequently transmitted speech data from the first device during the communication session (step M).

2. The method of claim 1 further including obtaining the image data from a network store (19A; 19B) associated with the telecommunication network such that the network store stores image data associated with the first device.

3. The method of claim 2 further including transmitting the image data to the store of the second device from the network store (19A; 19B).

4. The method of claim 1 further including obtaining the image data directly from the first device (1A).

5. The method of claim 1, further including initiating a communication link between at least the first and second devices for transmitting speech data between at least the first and second devices (step B).

6. The method of claim 5, further including storing the image data in a network store (19A; 19B) before initiating the communication link.

7. The method of any one preceding claim further including displaying the image data on the second device (1B) contemporaneously with reproducing the speech data.

8. The method of claim 2 further including transmitting the image data from the first device (1A) to the network store (19A; 19B) prior to the first device transmitting the message or command.

9. The method of any one of claims 1 to 8, wherein, during the communication session, speech data are reproduced on the first device (1A) or the second device (1B) but not simultaneously on the first device and the second device.

10. The method of any one of claims 1 to 9, wherein data associated with the communication session is transmitted in the packet switched domain.

11. The method of any one of claims 1 to 10, wherein the image data comprises data allowing the reproduction of a moving picture or video clip.

12. The method of any one of claims 1 to 11, wherein the telecommunications network comprises a mobile telecommunications network, and wherein the first device and/or the second device are mobile telecommunications terminals for communicating wirelessly with the mobile telecommunications network.

13. The method of any one of claims 1 to 12, wherein the telecommunications network comprises a GSM communications network, a UMTS communications network or a GPRS communications network.

14. The method of any one of claims 1 to 12, wherein the communication session comprises a session initiation protocol, SIP, session.

15. The method of any one preceding claim wherein the image data transmitted to the second device provides a visual indication of the first device as the source of the speech data.

16. The method of any one preceding claim further including upon the second device receiving speech data from the first device, the second device retrieving the image data associated with the first device from the store, and displaying the image data before and/or during reproduction of the speech data.

17. The method of claim 16 wherein the second device retrieves the image data from the store in response to a message or flag included with the speech data.

18. A system for controlling a PoC communication session between at least first and second mobile communication devices, each of which is associated with a telecommunication network, the system including:
receiver adapted to receive a message or command from the first device during the communication session;
controller adapted to:
upon receiving the message or command, determine whether image data associated with the first device has been previously sent for storing in a store of the second device; and
if it is determined that the image data has not been so sent, sending the image data to the second device for storing the image data in a store of the second device, in order to enable the reproduction of that image data on the second device in response to any subsequently transmitted speech data from the first device during the communication session.

19. The system of claim 18 wherein the controller is configured on a network server and is further adapted to obtain the image data from a network store associated with the telecommunication network such that the network store stores image data associated with the first device.

20. The system of claim 19 wherein the controller is further adapted to transmit the image data to the store of the first device from the network store.

21. The system of claim 18 wherein the controller is associated with the second device and is further adapted to obtain the image data directly from the first device.

22. The system of claim 18 or 19, wherein the controller is further adapted to initiate a communication link between the first device and the second device for transmitting speech data between the first device and the second device.

23. The system of claim 22, wherein the controller is configured to store the image data in a network store before initiating the communication link.

24. The system of any one of claims 18 to 23, further including means for displaying the image data on the second device contemporaneously with reproducing the speech data.

25. The system of claim 19 or 20, wherein the first device is configured to transmit the image data to the network store prior to transmitting the message or command.

26. The system of any one of claims 18 to 25, wherein, during the communication link, speech data are reproduced on the first device or the second device but not simultaneously on the first device and the second device.

27. The system of any one of claims 18 to 26, wherein data associated with the communication link is transmitted in the packet switched domain.

28. The system of any one of claims 18 to 27, wherein the image data comprises data allowing the reproduction of a moving picture or video clip.

29. The system of any one of claims 18 to 28, wherein the telecommunications network comprises a mobile telecommunications network, and wherein the first device and/or the second device are mobile telecommunications terminals for communicating wirelessly with the mobile telecommunications network.

30. The system of any one of claims 18 to 29, wherein the communications network comprises a GSM communications network, a UMTS communications network or a GPRS communications network.

31. The system of any one of claims 18 to 30, wherein the communication session comprises a SIP session.

32. The system of any one of claims 18 to 31 wherein the image data transmitted to the second device provides a visual indication of the first device as the source of the speech data.

33. The system of any one of claims 18 to 32 the second device further including a device controller adapted to:
upon the second device receiving speech data from the first device, retrieve the image data from the store; and
display the image data before and/or during reproduction of the speech data.

34. The system of claim 33 wherein the device controller is adapted to retrieve the image data from the store in response to a message or flag included with the speech data.

## Patentansprüche

1. Verfahren zum Steuern einer PoC-Kommunikationssitzung (Push-to-talk over Cellular) für zumindest ein erstes und ein zweites mobiles Telekommunikationsgerät (1A, 1B), von denen jedes mit einem Telekommunikationsnetz verknüpft ist, wobei das Verfahren Folgendes umfasst:
Empfangen einer Nachricht oder eines Befehls von dem ersten Gerät (1A) im Verlauf der Kommunikationssitzung,
bei Empfangen der Nachricht oder des Befehls Ermitteln, ob mit dem ersten Gerät (1A) verknüpfte Bilddaten bereits zum Speichern in einem Speicher des zweiten Geräts gesendet wurden (Schritt J), und
wenn ermittelt wird, dass die Bilddaten noch nicht gesendet wurden, Senden der Bilddaten zu dem zweiten Gerät zum Speichern in einem Speicher des zweiten Geräts (1B) (Schritt K), damit die Wiedergabe dieser Bilddaten aus dem Speicher auf dem zweiten Gerät (1B) als Reaktion auf nachfolgend von dem ersten Gerät im Verlauf der Kommunikationssitzung übermittelte Sprachdaten möglich ist (Schritt M).

2. Verfahren nach Anspruch 1, das ferner das Abrufen der Bilddaten aus einem derart mit dem Telekommunikationsnetz verknüpften Netzwerkspeicher (19A; 19B) umfasst, dass der Netzwerkspeicher mit dem ersten Gerät verknüpfte Bilddaten speichert.

3. Verfahren nach Anspruch 2, das ferner das Übermitteln der Bilddaten aus dem Netzwerkspeicher (19A; 19B) zum Speicher des zweiten Geräts umfasst.

4. Verfahren nach Anspruch 1, das ferner das direkte Abrufen der Bilddaten vom ersten Gerät (1A) umfasst.

5. Verfahren nach Anspruch 1, das ferner das Einleiten einer Kommunikationsverbindung zwischen zumindest dem ersten und dem zweiten Gerät zum Übermitteln von Sprachdaten zwischen zumindest dem ersten und dem zweiten Gerät umfasst (Schritt B).

6. Verfahren nach Anspruch 5, das ferner vor dem Einleiten der Kommunikationsverbindung das Speichern der Bilddaten in einem Netzwerkspeicher (19A; 19B) umfasst.

7. Verfahren nach einem der vorhergehenden Ansprüche, das ferner das Anzeigen der Bilddaten auf dem zweiten Gerät (1B) gleichzeitig mit dem Wiedergeben der Sprachdaten umfasst.

8. Verfahren nach Anspruch 2, das ferner das Übermitteln der Bilddaten aus dem ersten Gerät (1A) zu dem Netzwerkspeicher (19A; 19B) umfasst, bevor das erste Gerät die Nachricht oder den Befehl übermittelt.

9. Verfahren nach einem der Ansprüche 1 bis 8, bei dem im Verlauf der Kommunikationssitzung auf dem ersten Gerät (1A) oder dem zweiten Gerät (1B), jedoch nicht gleichzeitig auf dem ersten und dem zweiten Gerät Sprachdaten wiedergegeben werden.

10. Verfahren nach einem der Ansprüche 1 bis 9, bei dem mit der Kommunikationssitzung verknüpfte Daten in der paketvermittelten Domäne übermittelt werden.

11. Verfahren nach einem der Ansprüche 1 bis 10, bei dem die Bilddaten Daten umfassen, die die Wiedergabe eines bewegten Bildes oder Videoclips ermöglichen.

12. Verfahren nach einem der Ansprüche 1 bis 11, bei dem das Telekommunikationsnetz ein Mobiltelekommunikationsnetz umfasst und es sich bei dem ersten und/ oder dem zweiten Gerät um Mobilkommunikationsendgeräte für das drahtlose Kommunizieren mit dem Mobilkommunikationsnetz handelt.

13. Verfahren nach einem der Ansprüche 1 bis 12, bei dem das Telekommunikationsnetz ein GSM-Kommunikationsnetz, ein UMTS-Kommunikationsnetz oder ein GPRS-Kommunikationsnetz umfasst.

14. Verfahren nach einem der Ansprüche 1 bis 12, bei dem die Kommunikationssitzung eine SIP-Sitzung (Session Initiation Protocol) umfasst.

15. Verfahren nach einem der vorhergehenden Ansprüche, bei dem die zum zweiten Gerät übermittelten Bilddaten einen visuellen Hinweis darauf bereitstellen, dass die Sprachdaten von dem ersten Gerät stammen.

16. Verfahren nach einem der vorhergehenden Ansprüche, das ferner umfasst, dass das zweite Gerät, wenn es Sprachdaten von dem ersten Gerät empfängt, die mit dem ersten Gerät verknüpften Bilddaten aus dem Speicher abfragt und die Bilddaten vor und/ oder bei der Wiedergabe der Sprachdaten anzeigt.

17. Verfahren nach Anspruch 16, bei dem das zweite Gerät die Bildaten als Reaktion auf eine Nachricht oder ein Flag in den Sprachdaten aus dem Speicher abfragt.

18. System zum Steuern einer PoC-Kommunikationssitzung zwischen zumindest einem ersten und einem zweiten Mobilkommunikationsgerät, von denen jedes mit einem Telekommunikationsnetz verknüpft ist, wobei das System Folgendes aufweist:
einen Empfänger, der so ausgelegt ist, dass er im Verlauf der Kommunikationssitzung eine Nachricht oder einen Befehl von dem ersten Gerät empfängt,
eine Steuereinheit, die so ausgelegt ist:
dass sie bei Empfangen der Nachricht oder des Befehls ermittelt, ob mit dem ersten Gerät verknüpfte Bilddaten bereits zum Speichern in einem Speicher des zweiten Geräts gesendet wurden, und
wenn ermittelt wird, dass die Bilddaten noch nicht gesendet wurden, die Bilddaten zum Speichern in einem Speicher des zweiten Geräts zu dem zweiten Gerät sendet, damit eine Wiedergabe dieser Bilddaten auf dem zweiten Gerät als Reaktion auf nachfolgend von dem ersten Gerät im Verlauf der Kommunikationssitzung übermittelte Sprachdaten möglich ist.

19. System nach Anspruch 18, bei dem die Steuereinheit auf einem Netzwerkserver konfiguriert und ferner so ausgelegt ist, dass sie die Bilddaten aus einem derart mit dem Telekommunikationsnetz verknüpften Netzwerkspeicher abruft, dass der Netzwerkspeicher mit dem ersten Gerät verknüpfte Bilddaten speichert.

20. System nach Anspruch 19, bei dem die Steuereinheit ferner so ausgelegt ist, dass sie die Bilddaten aus dem Netzwerkspeicher zu dem Speicher des ersten Geräts übermittelt.

21. System nach Anspruch 18, bei dem die Steuereinheit mit dem zweiten Gerät verknüpft und ferner so ausgelegt ist, dass sie die Bilddaten direkt aus dem ersten Gerät abruft.

22. System nach Anspruch 18 oder 19, bei dem die Steuereinheit ferner so ausgelegt ist, dass sie zwischen dem ersten und dem zweiten Gerät eine Kommunikationsverbindung zum Übermitteln von Sprachdaten zwischen dem ersten und dem zweiten Gerät einleitet.

23. System nach Anspruch 22, bei dem die Steuereinheit so konfiguriert ist, dass sie vor dem Einleiten der Kommunikationsverbindung die Bilddaten in einem Netzwerkspeicher speichert.

24. System nach einem der Ansprüche 18 bis 23, das ferner Mittel zum Anzeigen der Bilddaten auf dem zweiten Gerät gleichzeitig mit dem Wiedergeben der Sprachdaten aufweist.

25. System nach Anspruch 19 oder 20, bei dem das erste Gerät so konfiguriert ist, dass es die Bilddaten vor dem Übermitteln der Nachricht oder des Befehls zu dem Netzwerkspeicher übermittelt.

26. System nach einem der Ansprüche 18 bis 25, bei dem im Verlauf der Kommunikationsverbindung Sprachdaten auf dem ersten oder dem zweiten Gerät, jedoch nicht gleichzeitig auf dem ersten und dem zweiten Gerät wiedergegeben werden.

27. System nach einem der Ansprüche 18 bis 26, bei dem mit der Kommunikationsverbindung verknüpfte Daten in der paketvermittelten Domäne übermittelt werden.

28. System nach einem der Ansprüche 18 bis 27, bei dem die Bilddaten Daten umfassen, die die Wiedergabe eines bewegten Bildes oder Videoclips ermöglichen.

29. System nach einem der Ansprüche 18 bis 28, bei dem das Telekommunikationsnetz ein Mobiltelekommunikationsnetz umfasst und es sich bei dem ersten und/ oder dem zweiten Gerät um Mobilkommunikationsendgeräte für das drahtlose Kommunizieren mit dem Mobilkommunikationsnetz handelt.

30. System nach einem der Ansprüche 18 bis 29, bei dem das Telekommunikationsnetz ein GSM-Kommunikationsnetz, ein UMTS-Kommunikationsnetz oder ein GPRS-Kommunikationsnetz umfasst.

31. System nach einem der Ansprüche 18 bis 30, bei dem die Kommunikationssitzung eine SIP-Sitzung umfasst.

32. System nach einem der Ansprüche 18 bis 31, bei dem die zum zweiten Gerät übermittelten Bilddaten einen visuellen Hinweis darauf bereitstellen, dass die Sprachdaten von dem ersten Gerät stammen.

33. System nach einem der Ansprüche 18 bis 32, bei dem das zweite Gerät ferner eine Gerätesteuereinheit aufweist, die so ausgelegt ist:
dass sie, wenn das zweite Gerät Sprachdaten von dem ersten Gerät empfängt, die Bilddaten aus dem Speicher abfragt und
die Bilddaten vor und/ oder bei der Wiedergabe der Sprachdaten anzeigt.

34. System nach Anspruch 33, bei dem die Gerätesteuereinheit so ausgelegt ist, dass sie die Bilddaten als Reaktion auf eine Nachricht oder ein Flag in den Sprachdaten aus dem Speicher abfragt.

## Revendications

1. Procédé destiné à piloter une session de communication PoC, messagerie vocale instantanée sur réseau cellulaire, pour au moins un premier et un deuxième dispositifs de télécommunications mobiles (1A, 1B), dont chacun est associé à un réseau de télécommunications, le procédé incluant les opérations consistant à :
recevoir un message ou une instruction provenant du premier dispositif (1A) au cours de la session de communication ;
lors de la réception du message ou de l'instruction, déterminer si des données d'image associées au premier dispositif (1A) ont précédemment été envoyées, ou non, pour être stockées dans un stockage du deuxième dispositif (étape J) ; et
s'il est déterminé que les données d'image n'ont pas été envoyées de cette manière, envoyer les données d'image au deuxième dispositif afin de stocker les données d'image dans un stockage du deuxième dispositif (1B) (étape K), dans le but de permettre la reproduction de ces données d'image, à partir du stockage, sur le deuxième dispositif (1B) en réaction à n'importe quelles données vocales transmises ultérieurement à partir du premier dispositif au cours de la session de communication (étape M).

2. Procédé selon la revendication 1, incluant en outre l'obtention des données d'image à partir d'un stockage en réseau (19A ; 19B) associé au réseau de télécommunications de telle sorte que le stockage en réseau stocke des données d'image associées au premier dispositif.

3. Procédé selon la revendication 2, incluant en outre la transmission des données d'image vers le stockage du deuxième dispositif à partir du stockage en réseau (19A; 19B).

4. Procédé selon la revendication 1, incluant en outre l'obtention des données d'image directement à partir du premier dispositif (1A).

5. Procédé selon la revendication 1, incluant en outre l'amorçage d'une liaison de communication entre au moins le premier et le deuxième dispositifs afin de transmettre des données vocales entre au moins le premier et le deuxième dispositifs (étape B).

6. Procédé selon la revendication 5, incluant en outre le stockage des données d'image dans un stockage en réseau (19A; 19B) avant d'amorcer la liaison de communication.

7. Procédé selon l'une quelconque des revendications précédentes, incluant en outre l'affichage des données d'image sur le deuxième dispositif (1B) de façon concomitante avec une reproduction des données vocales.

8. Procédé selon la revendication 2, incluant en outre la transmission des données d'image à partir du premier dispositif (1A) vers le stockage en réseau (19A ; 19B) avant que le premier dispositif ne transmette le message ou l'instruction.

9. Procédé selon l'une quelconque des revendications 1 à 8, au cours de la session de communication, des données vocales étant reproduites sur le premier dispositif (1A) ou le deuxième dispositif (1B), mais pas en simultanéité sur le premier dispositif et le deuxième dispositif.

10. Procédé selon l'une quelconque des revendications 1 à 9, des données associées à la session de communication étant transmises dans le domaine à commutation de paquets.

11. Procédé selon l'une quelconque des revendications 1 à 10, les données d'image englobant des données autorisant la reproduction d'une image animée ou d'un clip vidéo.

12. Procédé selon l'une quelconque des revendications 1 à 11, le réseau de télécommunications comprenant un réseau de télécommunications mobiles, et le premier dispositif et/ou le deuxième dispositif étant des terminaux de télécommunications mobiles pour assurer des communications sans fil avec le réseau de télécommunications mobiles.

13. Procédé selon l'une quelconque des revendications 1 à 12, le réseau de télécommunications comprenant un réseau de communications GSM, un réseau de communications UMTS ou un réseau communications GPRS.

14. Procédé selon l'une quelconque des revendications 1 à 12, la session de communication englobant une session SIP, protocole d'ouverture de session.

15. Procédé selon l'une quelconque des revendications précédentes, les données d'image transmises au deuxième dispositif procurant une indication visuelle du premier dispositif comme étant la source des données vocales.

16. Procédé selon l'une quelconque des revendications précédentes, incluant en outre, lors de la réception par le deuxième dispositif de données vocales en provenance du premier dispositif, les opérations consistant à faire récupérer au deuxième dispositif les données d'image associées au premier dispositif à partir du stockage, et à afficher les données d'image avant et/ou pendant une reproduction des données vocales.

17. Procédé selon la revendication 16, le deuxième dispositif récupérant les données d'image à partir du stockage en réaction à un message ou un indicateur inclus aux données vocales.

18. Système destiné à piloter une session de communication PoC entre au moins un premier et un deuxième dispositifs de communications mobiles, dont chacun est associé à un réseau de télécommunications, le système incluant :
un récepteur conçu pour recevoir un message ou une instruction provenant du premier dispositif au cours de la session de communication ;
un contrôleur conçu pour :
lors de la réception du message ou de l'instruction, déterminer si des données d'image associées au premier dispositif ont précédemment été envoyées, ou non, pour être stockées dans un stockage du deuxième dispositif ; et
s'il est déterminé que les données d'image n'ont pas été envoyées de cette manière, envoyer les données d'image au deuxième dispositif afin de stocker les données d'image dans un stockage du deuxième dispositif, dans le but de permettre la reproduction de ces données d'image sur le deuxième dispositif en réaction à n'importe quelles données vocales transmises ultérieurement à partir du premier dispositif au cours de la session de communication.

19. Système selon la revendication 18, le contrôleur étant configuré sur un serveur de réseau et étant conçu en outre pour obtenir les données d'image à partir d'un stockage en réseau associé au réseau de télécommunications de telle sorte que le stockage en réseau stocke des données d'image associées au premier dispositif.

20. Système selon la revendication 19, le contrôleur étant conçu en outre pour transmettre les données d'image vers le stockage du premier dispositif à partir du stockage en réseau.

21. Système selon la revendication 18, le contrôleur étant associé au deuxième dispositif et étant conçu en outre pour obtenir les données d'image directement à partir du premier dispositif.

22. Système selon la revendication 18 ou 19, le contrôleur étant conçu en outre pour amorcer une liaison de communication entre le premier dispositif et le deuxième dispositif afin de transmettre des données vocales entre le premier dispositif et le deuxième dispositif.

23. Système selon la revendication 22, le contrôleur étant configuré de façon à stocker les données d'image dans un stockage en réseau avant d'amorcer la liaison de communication.

24. Système selon l'une quelconque des revendications 18 à 23, incluant en outre des moyens pour afficher les données d'image sur le deuxième dispositif de façon concomitante avec une reproduction des données vocales.

25. Système selon la revendication 19 ou 20, le premier dispositif étant configuré de façon à transmettre les données d'image vers le stockage en réseau avant de transmettre le message ou l'instruction.

26. Système selon l'une quelconque des revendications 18 à 25, au cours de la liaison de communication, des données vocales étant reproduites sur le premier dispositif ou le deuxième dispositif, mais pas en simultanéité sur le premier dispositif et le deuxième dispositif.

27. Système selon l'une quelconque des revendications 18 à 26, des données associées à la liaison de communication étant transmises dans le domaine à commutation de paquets.

28. Système selon l'une quelconque des revendications 18 à 27, les données d'image englobant des données autorisant la reproduction d'une image animée ou d'un clip vidéo.

29. Système selon l'une quelconque des revendications 18 à 28, le réseau de télécommunications comprenant un réseau de télécommunications mobiles, et le premier dispositif et/ou le deuxième dispositif étant des terminaux de télécommunications mobiles pour assurer des communications sans fil avec le réseau de télécommunications mobiles.

30. Système selon l'une quelconque des revendications 18 à 29, le réseau de communications comprenant un réseau de communications GSM, un réseau de communications UMTS ou un réseau communications GPRS.

31. Système selon l'une quelconque des revendications 18 à 30, la session de communication englobant une session SIP.

32. Système selon l'une quelconque des revendications 18 à 31, les données d'image transmises au deuxième dispositif procurant une indication visuelle du premier dispositif comme étant la source des données vocales.

33. Système selon l'une quelconque des revendications 18 à 32, le deuxième dispositif incluant en outre un contrôleur de dispositif conçu pour :
lors de la réception par le deuxième dispositif de données vocales en provenance du premier dispositif, récupérer les données d'image à partir du stockage ; et
afficher les données d'image avant et/ou pendant une reproduction des données vocales.

34. Système selon la revendication 33, le contrôleur de dispositif étant conçu pour récupérer les données d'image à partir du stockage en réaction à un message ou un indicateur inclus aux données vocales.
